# EUROPÄISCHE PATENTSCHRIFT

(11) **EP 2 027 645 B1**
(45) Veröffentlichungstag und Bekanntmachung des Hinweises auf die Patenterteilung: **24.06.2020**
(21) Anmeldenummer: 07728804.1
(22) Anmeldetag: 04.05.2007
(51) Int. Cl.: H02K 55/04, H02K 3/52

(54) **MASCHINE MIT UNGEKÜHLTEM ROTORKÖRPER UND GEKÜHLTER ROTORWICKLUNG SOWIE ZUGEORDNETER HALTE- UND/ODER ABSTÜTZEINRICHTUNG**
MACHINE WITH UNCOOLED ROTOR BODY AND COOLED ROTOR WINDING AND ASSOCIATED HOLDING AND/OR SUPPORT DEVICE
MACHINE AVEC CORPS DE ROTOR NON REFROIDI ET ENROULEMENT DE ROTOR REFROIDI AINSI QUE DISPOSTIF ASSOCIÉ DE MAINTIEN ET/OU D'APPUI

(30) Priorität: 12.06.2006 DE 102006027219
(43) Veröffentlichungstag der Anmeldung: 25.02.2009
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2007/054351
(87) Internationale Veröffentlichungsnummer: WO 2007/144231

(56) Entgegenhaltungen:
- EP-B1- 1 366 559
- WO-A-2004/068682
- GB-A- 1 361 426
- JP-A- 7 222 431

## Beschreibung

Die Erfindung bezieht sich auf eine Maschine mit einem um eine Rotationsachse drehbar gelagerten Rotor, der
- einen ungekühlten Rotorkörper umfasst, der an einer Außenseite Ausnehmungen oder Abplattungen aufweist, in deren Querschnittsflächenbereich wenigstens eine in einem Kryostaten mit einer Kryostatenwand untergebrachte, auf Tieftemperatur zu kühlende Rotorwicklung angeordnet ist und
- mit einer Halte- und/oder Abstützeinrichtung zur Übertragung von an der Rotorwicklung angreifenden Kräften über die Kryostatenwand auf den Rotorkörper versehen ist, wobei
- die Halte- und/oder Abstützeinrichtung wenigstens ein Abstützelement enthält über das eine Wärmeübertragung vom Rotorkörper auf die Rotorwicklung erfolgt.

Eine entsprechende Maschine ist aus DE 10 2004 039 855 A1 bekannt.

Bei rotierenden Maschinen mit auf Tieftemperatur unter 80 K gekühlter, insbesondere supraleitender Rotorwicklung fällt das Drehmoment teilweise an den kalten Wicklungen des Rotors an. Das anliegende Drehmoment muss, um es nutzen zu können, auf eine warme Welle übertragen werden. Eine hierzu geeignete Vorrichtung muss einerseits das Drehmoment, dass bei großen Maschinen einige 100 kNm betragen kann übertragen können, andererseits muss die Haltevorrichtung der supraleitenden Rotorwicklungen thermisch gut isolierend sein. Nur bei hinreichend guter thermischer Isolierung ist es möglich die Rotorwicklungen mit begrenztem Kühlaufwand auf der für die Supraleitung notwendigen tiefen Temperatur zu halten.

Bei aus dem Stand der Technik bekannten Maschinen werden die supraleitenden Rotorwicklungen von einem Wicklungsträger, welcher sich wiederum auf einem zentralen Trägerkern befindet, gehalten. Eine solche Anordnung ist aus DE 199 43 783 A1 bekannt. Rotorwicklungen, Wicklungsträger und Trägerkern befinden sich bei einer solchen Maschine auf einer für die Supraleitung notwendigen tiefen Temperatur. Durch die große Masse der kalten Tragestruktur ergeben sich bei Maschinen dieses Bautyps sehr lange Abkühlzeiten, sowie die Notwendigkeit leistungsstarke Kühlsysteme einzusetzen. Eine weitere Maschine dieses Bautyps ist in WO 98/02953 offenbart.

Aufgrund der vorgenannten technischen Probleme ist es für große Maschinen vorteilhaft, zumindest einen Teil der Tragestruktur der Rotorwicklungen nicht auf die für die Supraleitung notwendigen tiefen Temperaturen abzukühlen, also eine zumindest teilweise warme Tragestruktur zu verwenden. Eine Maschine solcher Bauart ist z.B. in DE 10 2004 039 855 offenbart. Bei Maschinen dieses Bautyps befindet sich die supraleitende Rotorwicklung in einem Kryostaten, welcher sich an der Außenseite des ungekühlten Rotorkörpers in einer entsprechenden Ausnehmung oder auf einer entsprechenden Abplattung befindet. Bei solchen Maschinen mit sog. warmer Tragestruktur ist es notwendig, die supraleitenden auf tiefe Temperaturen gekühlten Rotorwicklungen mit einer geeigneten Halte- und/oder Abstützvorrichtung am warmen Rotorkörper zu befestigen. Eine solche Halte- und /oder Abstützvorrichtung ist aus DE 103 03 307 A1 bekannt.

Bei den aus dem Stand der Technik bekannten Maschinen finden Verluste durch Wärmeleitung von den sich auf tiefen Temperaturen befindenden supraleitenden Rotorwicklungen, über die verschiedenen Teile einer Halte- und/oder Abstützvorrichtung statt. Zur Aufrechterhaltung der für die Supraleitung notwendigen tiefen Temperaturen im Bereich der Rotorwicklungen, muss eine entsprechende Kühlleistung über das Kühlsystem in diese Bereiche der Maschine zugeführt werden.

GB 1 361 426 A betrifft hitzeisolierte Behälter mit Doppelwandstruktur, insbesondere kryogene Behälter. Ein Stützbauteil kann Schichten aus Fasermaterial und metallisiertem Kunststoff umfassen.

WO 2004 068 682 offenbart eine Maschine gemäß dem Oberbegriff des Anspruchs 1.

Aufgabe der vorliegenden Erfindung ist es die Halte- und/oder Abstützvorrichtung der supraleitenden Rotorwicklungen einer Maschine der eingangs erwähnten Bauart dahingehend zu verbessern, dass die Verluste infolge von Wärmeleitung von den kalten supraleitenden Rotorwicklungen auf den ungekühlten Rotorkörper verringert werden können.

Diese Aufgabe wird erfindungsgemäß mit den in Anspruch 1 angegebenen Maßnahmen gelöst. Demgemäß soll die Maschine mit einem um eine Rotationsachse drehbar gelagerten Rotor der einen ungekühlten Rotorkörper aufweist, welcher auf der Außenseite Ausnehmungen oder Abplattungen aufweist, in deren Querschnittsflächenbereich, die zu kühlenden Rotorwicklungen in einem Kryostaten untergebracht sind und deren Rotor ferner eine Halte- und/oder Abstützeinrichtung zur Übertragung von an der Rotorwicklung angreifenden Kräften über die Kryostatenwand auf den Rotorkörper versehen sein. Die Halte- und/oder Abstützeinrichtung soll weiter wenigstens ein Abstützelement enthalten über das eine Wärmeübertragung vom Rotorkörper auf die Rotorwicklung erfolgt. Erfindungsgemäß soll das wenigstens eine Abstützelement mit Mitteln zur Verminderung der Wärmeleitfähigkeit ausgestattet ist, die wenigstens einen Teil einer Querschnittsfläche senkrecht zur Wärmübertragungsrichtung ausfüllen.

Durch die erfindungsgemäßen Maßnahmen werden Verluste infolge von Wärmeleitung von den kalten Rotorwicklungen auf den warmen Rotorkörper verringert.

Durch die erfindungsgemäßen Maßnahmen ergibt sich der Vorteil, dass das Kühlsystem der Maschine geringer dimensioniert werden kann. Die Minimierung von Kühlverlusten durch Wärmeleitung wirkt sich somit positiv auf den Wirkungsgrad der Maschine aus.
- Erfindungsgemäß weisen die Abstützelemente als Mittel zur Verminderung der Wärmeleitfähigkeit eine im Wesentlichen senkrecht zur Wärmeübertragungsrichtung orientierte Schichtstruktur auf. In Folge der durch die Schichtstruktur realisierten Wärmewiderstände kann die Wärmeleitfähigkeit des Abstützelements in Richtung der Wärmeübertragungsrichtung weiter verringert werden. Durch eine solche Schichtstruktur aus schlecht wärmeleitendem Material und darin eingebrachten Wärmewiderständen kann gegenüber einer Realisation des Abstützelementes als massives Element aus schlecht wärmeleitendem Material, die Wärmeleitfähigkeit weiter verringert werden.
- Die Schichtstruktur des Abstützelementes ist erfindungsgemäß derart aufgebaut, dass das Abstützelement aus Einzelteilen, welche unter Ausbildung von Wärmewiderständen zusammengefügt werden, realisiert ist. Auf diese Weise werden an den zwischen den einzelnen Teilen entstehenden Grenzflächen weitere Wärmewiderstände aufgebaut.
- Weiterhin bestehen die Einzelteile des Abstützelementes aus einem glasfaserverstärkten Kunststoff. Vorteilhaft besitzt glasfaserverstärkter Kunststoff sowohl eine hohe Festigkeit, wie auch eine geringe Wärmeleitfähigkeit.

Vorteilhafte Ausgestaltungen der erfindungsgemäßen Maschine gehen aus den von Anspruch 1 abhängigen Ansprüchen hervor. Dabei kann die Ausführungsform nach Anspruch 1 mit den Merkmalen einer der Unteransprüche oder vorzugsweise auch denen aus mehreren Unteransprüchen kombiniert werden.

So kann das Abstützelement zwischen der Rotorwicklung und der Kryostatenwand oder zwischen der Kryostatenwand und dem Rotorkörper angebracht sein. Durch diese Maßnahme kann wahlweise der Wärmeverlust zwischen Rotorwicklung und Kryostatenwand oder andererseits der Wärmeverlust zwischen Kryostatenwand und Rotorkörper verringert werden.

Die Halte- und/oder Abstützeinrichtung der Maschine kann weiterhin mehrere Abstützelemente enthalten, von denen mindestens ein Abstützelement zwischen Rotorwicklung und Kryostatenwand und mindestens ein weiteres Abstützelement zwischen Kryostatenwand und Rotorkörper angebracht ist.

Ein derartiger Aufbau gestattet es, ein zweistufig aufgebautes Kühlsystem zu realisieren, bei dem sich vorzugsweise die Kryostatenwand auf einer Temperatur befindet die zwischen der Temperatur der kalten Rotorwicklungen und der Temperatur des Rotorkörpers liegt. Auf diese Weise lassen sich die Wärmeleitungsverluste weiter minimieren.
- Das Abstützelement ist erfindungsgemäß als Bauteil aus glasfaserverstärktem Kunststoff realisiert und eine Schichtstruktur, welche durch die Lage der Glasfasern in dem Kunststoff entsteht, aufweisen. Vorteilhaft wird auf diese Weise die oben beschriebene Wirkungsweise von Wärmewiderständen durch die mikroskopische Struktur des glasfaserverstärkten Kunststoffs realisiert. Wärmewiderstände ergeben sich so an den einzelnen Glasfaserlagen.
- Das Abstützelement kann ferner in einer nicht erfindungsgemäßen Ausgestaltung aus einem porösen Material gefertigt sein, welches vorzugsweise ein Sintermaterial ist. Auf diese Weise werden Wärmewiderstände durch die im porösen Material vorhandenen Hohlräume realisiert, anstatt wie oben erwähnt durch eine Lagenstruktur des Bauteils.
- Das Abstützungselement ist weiterhin derart konstruiert, dass es im Wesentlichen geeignet ist Druckbelastungen zu widerstehen.
- Die Rotorwicklung der Maschine kann aus einem supraleitenden Material gefertigt sein. Die Verwendung von Supraleitern als Material für die Rotorwicklungen erlaubt im Vergleich zu normal leitenden Rotorwicklungen eine kompaktere Bauform der Maschine.
- Als supraleitendes Material kann HTC-Material zu Einsatz kommen. Unter HTC-Material ist ein supraleitendes Material mit einer hohen Sprungtemperatur zu verstehen (High Tc-Material). Die Sprungtemperatur liegt typischerweise oberhalb der Siedetemperatur von Stickstoff. Durch den Einsatz von Hochtemperatursupraleitern kann somit Stickstoff als Kühlmittel verwendet werden, dieser ist preiswert und gut verfügbar.
- Als supraleitendes Material kann weiterhin LTC-Material zum Einsatz kommen. Unter LTC-Material ist Material für Tieftemperatursupraleiter (Low Tc-Superconductors) zu verstehen. Diese Materialien sind technisch bereits länger erprobt als HTC-Material und daher gut handhabbar.

Weitere vorteilhafte Ausgestaltungen der erfindungsgemäßen Maschine gehen aus den vorstehend nicht angesprochenen Unteransprüchen sowie den Zeichnungen hervor.

Die Erfindung wird nachfolgend unter Bezugnahme auf die Zeichnungen noch weiter erläutert, in denen bevorzugte Ausführungsformen der Maschine gemäß der Erfindung oder von Teilen von dieser in schematischer Darstellung angedeutet sind.

Da zeigen
- Figur 1: einen Querschnitt durch ein Rotorelement, gemäß dem Stand der Technik,
- Figur 2: eine bevorzugte Ausführungsform einer Halteund/oder Abstützvorrichtung, welche mindestens ein erfindungsgemäßes Abstützelement enthält,
- Figur 3 und 4: bevorzugte Ausführungsformen des erfindungsgemäßen Abstützelementes, und
- Figur 5: eine Ausführungsform eines nicht erfindungsgemäßen Abstützelements.

Die sich in den Figuren entsprechenden Teile sind jeweils mit denselben Bezugszeichen versehen.

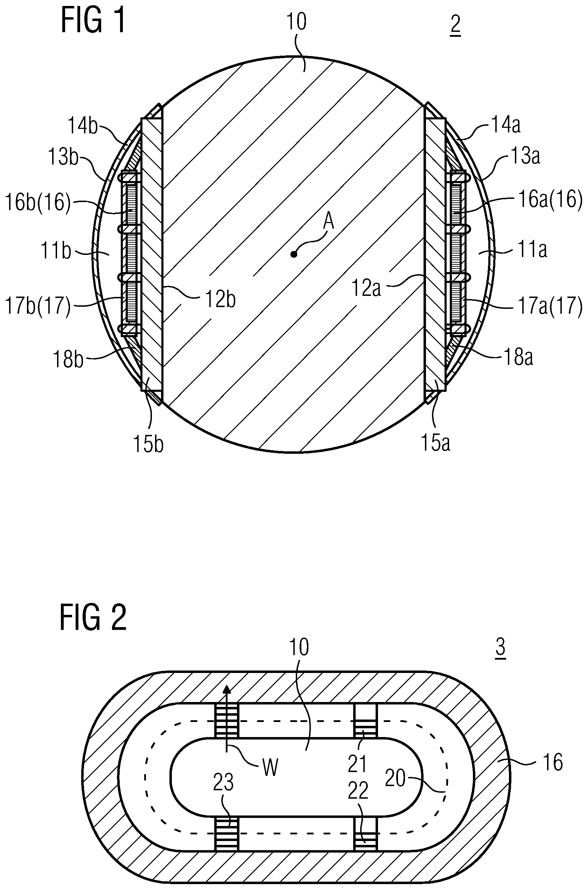

Figur 1 zeigt einen im Querschnitt angedeuteten Rotor 2 einer Maschine, wie sie aus DE 10 2004 039 855 A1 bekannt ist. Mit 10 bezeichnet ist ein ungekühlter, um eine Achse A drehbar gelagerter Rotorkörper, welcher vorzugsweise aus einem ferromagnetischen Material, wie insbesondere Eisen, herstellbar ist. Der Rotorkörper 10 verfügt an seiner Außenseite über sich gegenüberliegende Ausnehmungen oder Abplattungen 11a, 11b. Diese Ausnehmungen oder Abplattungen können im Querschnitt gesehen kreissegmentartig sein und erstrecken sich axial, d.h. parallel zur Achse A des Rotorkörpers. Eine Ausgestaltung der Ausnehmungen gemäß anderen hier nicht aufgeführten Formen ist ebenfalls möglich. Auf der der Rotationsachse zugewandten Seite der Ausnehmungen oder Abplattungen sind Bodenplatten 12a, 12b am Rotorkörper 10 angebracht, die sich, im Querschnitt gesehen, entlang von Kreissehnen oder Sekanten erstrecken. Mit 14a, 14b bezeichnete Wandteile vervollständigen, im Querschnitt betrachtet das Kreissegment. Sie bilden gemeinsam mit den Bodenplatten 12a, 12b einen Kryostaten 13a, 13b. Innerhalb der Kryostaten 13a, 13b befinden sich zumindest Teile einer Rotorwicklung 16a, 16b einer allgemein mit 16 bezeichneten Erregerwicklung. Die Rotorwicklungen 16a, 16b können von Rennbahntyp sein und insbesondere aus mehreren zusammengesetzten Teilen bestehen. Insbesondere können die Rotorwicklungen 16a, 16b der Erregerwicklung 16 aus supraleitendem Material hergestellt sein. Als supraleitendes Material kann insbesondere YBCO verwendet werden. Die Rotorwicklungen 16a, 16b können bei Verwendung von YBCO oder BPSCCO als supraleitendes Material mit flüssigem Stickstoff, Helium oder Neon als Kühlmittel auf die für die Supraleitung notwendige Temperatur gebracht werden. Ferner können die Rotorwicklungen 16a, 16b von schienen- oder rinnenartigen Halteelementen 17a, 17b einer allgemein mit 17 bezeichneten Halte- und/oder Abstützeinrichtung in den Kryostaten 13a bzw. 13b angebracht sein. Die Halte- und/oder Abstützeinrichtung 17 kann im speziellen Abstützelemente 18a, 18b zur Aufnahme von Druck- und/oder Zugkräften enthalten.

Figur 2 zeigt einen allgemein mit 3 bezeichneten Teil einer Maschine, bei der eine Rotorwicklung 16a, 16b mit einem warmen Rotorkörper 10 über mehrere Abstützelemente 21 bis 23 verbunden ist. Die Rotorwicklung 16a, 16b kann im Speziellen vom Rennbahntyp sein und zumindest teilweise aus supraleitendem Material gefertigt sein. Die Rotorwicklung 16a, 16b befindet sich innerhalb eines Kryostaten gemäß Figur 1 dessen Kryostatenwand 20 sich typischerweise zwischen dem warmen Rotorkern 10 und der Rotorwicklung 16a, 16b befindet. Ein erfindungsgemäßes Abstützelement 21, 22 kann sich nun wahlweise zwischen dem warmen Rotorkern 10 und der Kryostatenwand 20, oder zwischen der Kryostatenwand 20 und der kalten Rotorwicklung 16 befinden.

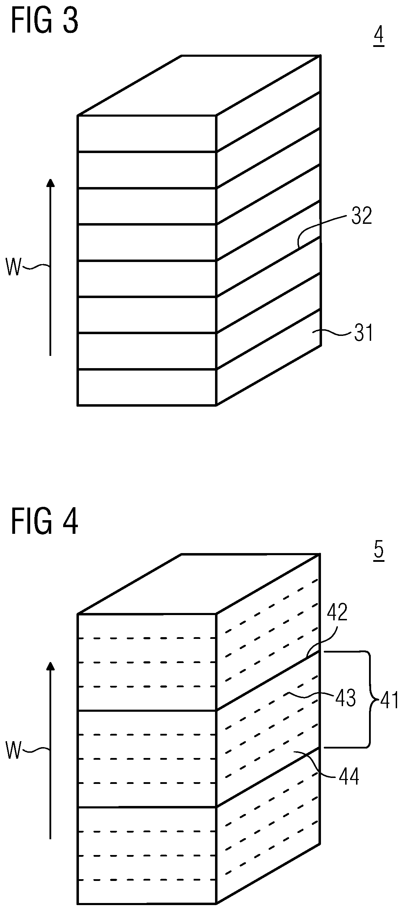

Erfindungsgemäß sind die Abstützelemente 21 bis 23 mit Maßnahmen zur Verringerung eines Wärmeflusses W von dem warmen Rotorkern 10 auf die kalte Rotorwicklung 16a, 16b ausgestattet. Diese Maßnahmen werden im Zusammenhang mit den Figuren 3 bis 5 näher betrachtet. Des Weiteren kann ein Abstützelement derart ausgestaltet sein, dass es über die Kryostatenwand 20 hinweg die kalte Rotorwicklung 16a, 16b mit dem warmen Rotorkern 10 verbindet. Eine solche Ausführungsform ist mit 23 bezeichnet in Figur 2 dargestellt. In diesem Fall kann das Abstützelement 23 zweiteilig ausgeführt sein. Ein erstes Teil verbindet die Rotorwicklung 16 und die Kryostatenwand 20 und ein zweites Teil verbindet die Kryostatenwand 20 und den Rotorkern 10 miteinander. Alternativ kann das Abstützelement 23 einteilig ausgeführt sein, dieses Bauteil verbindet direkt die kalte Rotorwicklung 16 mit dem warmen Rotorkern 10. Die Einsatzmöglichkeiten der erfindungsgemäßen Abstützelemente 21 bis 23 beschränken sich nicht auf die in Figur 2 angegebene Ausführungsform 2. Es sind verschiedenste Geometrien zwischen Rotorwicklung 16, Kryostatenwand 20 und Rotorkern 10 möglich. Ebenfalls können eine verschieden große Zahl von Abstützelementen 21 bis 23 verwendet werden. Insbesondere ist es auch möglich, dass die Kryostatwand direkt am Kern 10 anliegt, oder sogar von ihm gebildet wird.

Figur 3 zeigt einen allgemein mit 4 bezeichneten schematisch dargestellten Aufbau eines erfindungsgemäßen Abstützelementes. Das Abstützelement 4 weist hierbei eine im Wesentlichen senkrecht zur Richtung eines Wärmeflusses W orientierte Schichtstruktur auf. Das Abstützelement 4 ist aus einem schlecht wärmeleitenden Material, nämlich erfindungsgemäß aus einem glasfaserverstärkten Kunststoff, gefertigt. Der glasfaserverstärkte Kunststoff besteht aus einer Matrix 31 und in diese Matrix 31 eingebetteten Lagen 32. Die Matrix 31 kann durch ein Kunst- oder Gießharz dargestellt sein und die eingebetteten Lagen 32 bestehen aus Glasfasern. Erfindungsgemäß bilden die eingebetteten Glasfasern Wärmewiderstände für den Wärmefluss W aus. Erfindungsgemäß ist das Abstützelement 4 aus mehreren Einzelteilen 31 aufgebaut, welche unter der Ausbildung von Wärmewiderständen 32 zu einem gemeinsamen Bauteil zusammengefügt sind.

Figur 4 zeigt eine allgemein mit 5 bezeichnete weitere Ausführungsform eines erfindungsgemäßen Abstützelementes. Gemäß dieser Ausführungsform sind die zuvor genannten Konzepte zur Ausbildung von Wärmewiderständen miteinander kombiniert worden. Das Abstützelement 5 besteht aus mehreren einzelnen Elementen 41, welche unter der Ausbildung von makroskopischen Wärmewiderständen 42 zu einem gemeinsamen Bauteil 5 zusammengefügt sind. Die einzelnen Elemente 41 können selbst wiederum eine Lagenstruktur aus Matrix 44 und eingebetteten mikroskopischen Wärmewiderständen 43 aufweisen. Der gesamte Wärmewiderstand der Abstützelementes 5 ergibt sich als Summe der Einzelwärmewiderstände. Mikroskopische Wärmewiderstände 43, werden z.B. durch eingebettete Glasfasermatten gebildet. Diese befinden sich in einer schlecht wärmeleitenden Matrix 44 aus z.B. Kunst- oder Gießharz. Die einzelnen Elemente 41 werden wiederum unter Ausbildung von makroskopischen Wärmewiderständen 42 zu einem Abstützelement 5 zusammengefügt. Auf diese Weise kann die Wirkung von mikroskopischen und makroskopischen Wärmewiderständen miteinander kombiniert werden.

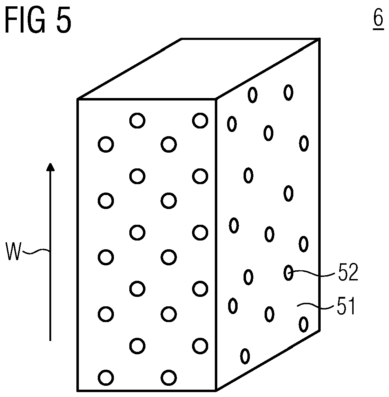

Figur 5 zeigt eine weitere, allgemein mit 6 bezeichnete, nicht erfindungsgemäße Ausführungsform der Abstützvorrichtung. Das Abstützelement 6 wird aus einem porösen Material gefertigt; im Speziellen sind hierfür Schüttmaterialien wie z.B. Perlit oder auch gesinterte Materialien geeignet. Die sich in der Matrix 51 befindenden Poren 52 bilden in dieser Ausführungsform die Wärmewiderstände für den Wärmefluss W aus.

Das Abstützelement kann weiterhin in der Vorzugsrichtung des Wärmeflusses W eine räumlich größere Ausdehnung aufweisen, als in einer Richtung senkrecht zur Vorzugsrichtung des Wärmeflusses W. Des Weiteren kann das Abstützelement durch die Wahl seiner Struktur und/oder der verwendeten Materialien derart ausgestaltet sein, dass es vorzugsweise Druckkräfte aufzunehmen vermag.

Das erfindungsgemäße Abstützelement kann insbesondere in Maschinen mit gekühlter supraleitender Rotorwicklung als Teil einer Halte- und/oder Abstützvorrichtung für die kalten supraleitenden Rotorwicklungen dienen. Diese Maschinen können als Motoren oder Generatoren eingesetzt werden. Die Einsatzmöglichkeiten einer solchen mit supraleitenden Rotorwicklungen ausgestatteten Maschine erstreckt sich mindestens auf die bekannten Einsatzgebiete vergleichbarer Maschinen mit normalleitenden Rotorwicklungen.

## Patentansprüche

1. Maschine mit einem um eine Rotationsachse drehbar gelagerten Rotor (2), der
• einen ungekühlten Rotorkörper (10) umfasst, der an seiner Außenseite Ausnehmungen oder Abplattungen (11a, 11b) aufweist, in deren Querschnittsflächenbereich wenigstens eine in einem Kryostaten (13a, 13b) mit einer Kryostatenwand (20) untergebrachte, auf Tieftemperatur zu kühlende Rotorwicklung (16a, 16b) angeordnet ist, und
• mit einer Halte- und/oder Abstützeinrichtung (17) zur Übertragung von an der Rotorwicklung (16a, 16b) angreifenden Kräften über die Kryostatenwand (20) auf den Rotorkörper (10) versehen ist, wobei die Halte- und/oder Abstützeinrichtung (17) wenigstens ein Abstützelement (4, 5, 21, 22, 23) enthält, über das eine Wärmeübertragung vom Rotorkörper (10) auf die Rotorwicklung (16a, 16b) erfolgt, wobei
das wenigstens eine Abstützelement (4, 5, 21, 22, 23) mit Mitteln zur Verminderung der Wärmeleitfähigkeit ausgestattet ist, die wenigstens einen Teil einer Querschnittsfläche senkrecht zur Wärmübertragungsrichtung ausfüllen, **dadurch gekennzeichnet, dass** das Abstützelement (4, 5, 21, 22, 23) als Mittel zur Verminderung der Wärmeleitfähigkeit eine im Wesentlichen senkrecht zur Wärmeübertragungsrichtung orientierte Schicht- oder Lagenstruktur aufweist, die aus Einzelteilen (31, 41) gebildet ist, welche unter Ausbildung von Wärmewiderständen (32, 42, 43) an ihren gegenseitigen Berührungsflächen zusammengefügt sind, wobei die Einzelteile (31, 41) des Abstützelements (4, 5, 21, 22, 23) aus glasfaserverstärktem Kunststoff bestehen.

2. Maschine gemäß Anspruch 1, **dadurch gekennzeichnet, dass** das wenigstens eine Abstützelement (4, 5, 21, 22, 23) zwischen Rotorwicklung (16a, 16b) und Kryostatenwand (20) oder Kryostatenwand (20) und Rotorkörper (10) angebracht ist.

3. Maschine gemäß Anspruch 1, **dadurch gekennzeichnet, dass** die Halte- und/oder Abstützeinrichtung (17) mehrere Abstützelemente (4, 5, 21, 22, 23) enthält, wobei mindestens ein Abstützelement (4, 5, 21, 22, 23) zwischen Rotorwicklung (16a, 16b) und Kryostatenwand (20) und mindestens ein Abstützelement (4, 5, 21, 22, 23) zwischen Kryostatenwand (20) und Rotorkörper (10) angebracht ist.

4. Die Maschine gemäß Anspruch 1, **dadurch gekennzeichnet, dass** das Abstützelement (4, 5, 21, 22, 23) ein Bauteil aus glasfaserverstärktem Kunststoff ist und die Schichtstruktur des Abstützelements (4, 5, 21, 22, 23) durch eine entsprechende Anordnung von Glasfasern in dem glasfaserverstärkten Kunststoff entsteht.

5. Maschine gemäß einem der vorstehenden Ansprüche, **dadurch gekennzeichnet, dass** das Abstützelement (4, 5, 21, 22, 23) im Wesentlichen Druckbelastungen ausgesetzt ist.

6. Maschine gemäß einem der vorstehenden Ansprüche, **dadurch gekennzeichnet, dass** die wenigstens eine Rotorwicklung (16a, 16b) aus einem supraleitendem Material besteht.

7. Maschine gemäß Anspruch 6, **dadurch gekennzeichnet, dass** das supraleitende Material ein LTC-Material ist.

8. Maschine gemäß Anspruch 6, **dadurch gekennzeichnet, dass** das supraleitende Material ein HTC-Material ist.

## Claims

1. Machine having a rotor (2) which is mounted such that it can rotate about a rotation axis and
• comprises an uncooled rotor body (10) which, on its outside, has recesses or flats (11a, 11b), in the cross-sectional surface area of which at least one rotor winding (16a, 16b) is arranged, which is accommodated in a cryostat (13, 13b) with a cryostat wall (20) and is to be cooled to low temperature, and
• is provided with a holding and/or supporting device (17) for transmission of forces acting on the rotor winding (16a, 16b) via the cryostat wall (20) to the rotor body (10), wherein the holding and/or supporting device (17) contains at least one supporting element (4, 5, 21, 22, 23) via which heat is transmitted from the rotor body (10) to the rotor winding (16a, 16b),
wherein
the at least one supporting element (4, 5, 21, 22, 23) is equipped with means to reduce the thermal conductivity, which means fill at least a part of a cross-sectional surface at right angles to the heat transmission direction, **characterized in that** as means for reducing the thermal conductivity, the supporting element (4, 5, 21, 22, 23) has a layer structure which is oriented essentially at right angles to the heat transmission direction and is formed from individual parts (31, 41) which are joined together on their mutual touching surfaces to form thermal resistances (32, 42, 43) the individual parts (31, 41) of the supporting element (4, 5, 21, 22, 23) are composed of glass-fiber-reinforced plastic.

2. Machine according to Claim 1, **characterized in that** the at least one supporting element (4, 5, 21, 22, 23) is fitted between the rotor winding (16a, 16b) and the cryostat wall (20), or cryostat wall (20) and rotor body (10).

3. Machine according to Claim 1, **characterized in that** the holding and/or supporting device (17) contains a plurality of supporting elements (4, 5, 21, 22, 23), wherein at least one supporting element (4, 5, 21, 22, 23) is fitted between the rotor winding (16a, 16b) and the cryostat wall (20) and at least one supporting element (4, 5, 21, 22, 23) is fitted between the cryostat wall (20) and the rotor body (10).

4. Machine according to Claim 1, **characterized in that** the supporting element (4, 5, 21, 22, 23) is a component composed of glass-fiber-reinforced plastic, and the layer structure of the supporting element (4, 5, 21, 22, 23) is created by an appropriate arrangement of glass fibers in the glass-fiber-reinforced plastic.

5. Machine according to one of the preceding claims, **characterized in that** the supporting element (4, 5, 21, 22, 23) is essentially subject to pressure loads.

6. Machine according to one of the preceding claims, **characterized in that** the at least one rotor winding (16a, 16b) is composed of a superconducting material.

7. Machine according to Claim 6, **characterized in that** the superconducting material is an LTC material.

8. Machine according to Claim 16, **characterized in that** the superconducting material is an HTC material.

## Revendications

1. Machine ayant un rotor (2) monté tournant autour d'un axe de rotation, qui
• comprend un corps (10) de rotor non refroidi, qui a, sur son côté extérieur, des évidements ou des méplats (11a, 1b), dans la région de surface en section transversale desquels est disposé au moins un enroulement (16a, 16b) de rotor à refroidir à une très basse température et logé dans un cryostat (13a, 13b) ayant une paroi (20) de cryostat, et
• est pourvue d'un dispositif (17) de maintien et/ou d'appui pour la transmission de forces attaquant l'enroulement (16a, 16b) de rotor, au corps (10) du rotor par l'intermédiaire de la paroi (20) de cryostat, le dispositif (17) de maintien et/ou d'appui comportant au moins un élément (4, 5, 21, 22, 23) d'appui, par lequel s'effectue la transmission de chaleur du corps (10) du rotor à l'enroulement (16a, 16b) du rotor,
dans laquelle
le au moins un élément (4, 5, 21, 22, 23) d'appui est équipé de moyens pour diminuer la conductivité thermique, qui remplissent au moins une partie d'une surface de section transversale perpendiculairement à la direction de transfert de la chaleur, **caractérisée en ce que** l'élément (4, 5, 21, 22, 23) d'appui a, comme moyens pour diminuer la conductivité thermique, une structure en couches ou en strates, orientée sensiblement perpendiculairement à la direction de la transmission de la chaleur et formée de parties (31, 41) individuelles, qui sont assemblées, en constituant des résistances (32, 42, 43) thermiques, sur leurs surfaces de contact opposées, les parties (31, 41) individuelles de l'élément (4, 5, 21, 22, 23) d'appui étant en matière plastique renforcée par de la fibre de verre.

2. Machine suivant la revendication 1, **caractérisée en ce que** le au moins un élément (4, 5, 21, 22, 23) d'appui est mis entre l'enroulement (16a, 16b) du rotor et la paroi (20) du cryostat ou la paroi (20) du cryostat et le corps (10) du rotor.

3. Machine suivant la revendication 1, **caractérisée en ce que** le dispositif (17) de maintien et/ou d'appui comporte plusieurs éléments (4, 5, 21, 22, 23) d'appui, au moins un élément (4, 5, 21, 22, 23) d'appui étant mis entre l'enroulement (16a, 16b) du rotor et la paroi (20) du cryostat et au moins un élément (4, 5, 21, 22, 23) d'appui étant mis entre la paroi (20) du cryostat et le corps (10) du rotor.

4. Machine suivant la revendication 1, **caractérisée en ce que** l'élément (4, 5, 21, 22, 23) d'appui est une pièce en matière plastique renforcée par de la fibre de verre et la structure en couches de l'élément (4, 5, 21, 22, 23) d'appui est créée par un agencement adéquat de fibres de verre dans la matière plastique renforcée par de la fibre de verre.

5. Machine suivant l'une des revendications précédentes, **caractérisée en ce que** l'élément (4, 5, 21, 22, 23) d'appui est soumis, pour l'essentiel, à des charges de pression.

6. Machine suivant l'une des revendications précédentes, **caractérisée en ce que** le au moins un enroulement (16a, 16b) du rotor est en un matériau supraconducteur.

7. Machine suivant la revendication 6, **caractérisée en ce que** le matériau supraconducteur est un matériau LTC.

8. Machine suivant la revendication 6, **caractérisée en ce que** le matériau supraconducteur est un matériau HTC.
